# EUROPÄISCHE PATENTSCHRIFT

(11) **EP 1 736 264 B1**
(45) Veröffentlichungstag und Bekanntmachung des Hinweises auf die Patenterteilung: **13.08.2008**
(21) Anmeldenummer: 06011953.4
(22) Anmeldetag: 09.06.2006
(51) Int. Cl.: B23B 29/04, B23Q 3/157, B23Q 3/155

(54) **Vorrichtung zur Innenbearbeitung von Werkstücken, insbesondere von Differentialgetriebegehäusen**
Device for inside machining of workpieces, especially of differential gear housings
Dispositif pour l'usinage intérieur de pièces, en particulier de carters d'engrenages différentiels

(30) Priorität: 23.06.2005 DE 102005029620
(43) Veröffentlichungstag der Anmeldung: 27.12.2006
(73) Patentinhaber: WEMA Vogtland GmbH, 08525 Plauen (DE)
(72) Erfinder: Rehm, Karl, 14469 Potsdam (DE); Stave, Hinrich, Dr., 87719 Mindelheim (DE)
(74) Vertreter: Hafner, Dieter

(56) Entgegenhaltungen:
- DE-A1- 19 716 491
- US-A1- 2003 049 086
- US-A1- 2004 226 154

## Beschreibung

Die Erfindung betrifft eine Vorrichtung zur Bearbeitung von Werkstücken, insbesondere zur Innenbearbeitung von Differentialgetriebegehäusen oder sonstigen Gehäusen. Angesprochen sind insbesondere Differentialgetriebegehäuse, die in der Grundform einen Hohlkörper darstellen, der sowohl außen als auch innen bearbeitet werden muß.

Die Außenbearbeitung solcher Gehäuse ist relativ unkompliziert, sie kann auf bekannten Drehmaschinen und Bearbeitungszentren nach bekannten Verfahren geschehen. Die Innenbearbeitung derartiger Werkstücke ist allerdings komplizierter, da das jeweilige Werkzeug dazu durch Öffnungen in deren Innenraum eingebracht werden muß.

Bei den angesprochenen Differentialgetriebegehäusen unterscheidet man grundsätzlich zwei Typen.
- Beim ersten Differentialgehäusetyp wird im Inneren ausschließlich eine Kugelkontur bearbeitet. Die Werkstücke sind so gestaltet, daß dazu Spezialwerkzeuge verwendet werden können, die einer Bohrstange ähneln. Sie tragen an der Spitze jedoch keine feste Scheide, sondern eine, die auf einem Hebel schwenkbar gelagert ist. Die Schwenkachse verläuft quer zur Werkzeuglängsachse und schneidet diese. Durch einen Planzugantrieb kann das Werkzeug während der Bearbeitung geschwenkt werden, so daß die Schneide eine Kugelinnenfläche erzeugt.

Die Differentialgehäuse des zweiten bekannten Typs sind im Innenbereich komplexer ausgebildet. Sie haben innen unterschiedliche Konturen, bestehend aus Kugelkalotten, Bohrungen, Senkungen und dergleichen. Um diese Formelemente mit hoher Genauigkeit herstellen zu können, ist es erforderlich, daß nacheinander auf unterschiedlichen Stationen unterschiedliche Fräs- und Senkwerkzeuge von einem Greifer in das Werkstückinnere eingefahren werden. Durch mindestens eine Bearbeitungsspindel, an welcher ein Führungsdorn angeordnet ist, kann ein passendes Werkzeug aufgenommen werden. Werden zwei sich gegenüberliegende Bearbeitungsspindeln vorgesehen, ist es möglich, durch axiale Zustellung der Spindeln bzw. Spanndorne das Werkzeug auf einen Dorn oder beide aufzufädeln und mit dem anderen Dorn axial zu verspannen. An ihrem freien Ende weisen die Spanndorne eine Drehmomentmitnahme z.B. in Form eines Vielkeilprofils für das Werkzeug auf. Die Bearbeitung im Innenbereich erfolgt dadurch, daß die eine Spindel bzw. beide Spindeln gemeinsam in Spindellängsrichtung verfahren werden. Wegen der vom Werkstück vorgegebenen sehr beengten Platzverhältnisse sind unterschiedliche Innenbearbeitungswerkzeuge mit unterschiedlichen Greifern und unterschiedlichen Spanndornen erforderlich.

Aufgrund dieser Tatsache können Werkstücke des zweiten Gehäusetyps nur auf komplizierten Sondermaschinen bearbeitet werden. Für jeden Spanndorntyp ist eine eigene Bearbeitungsstation vorgesehen. Derartige Sondermaschinen haben zwar hohe Fertigungskapazitäten, die aber bei sinkenden Stückzahlen pro Werkstückvariante oft nicht mehr ausgelastet werden. Eine Umrüstung der Bearbeitungsstation auf andere Werkstücktypen ist nur manuell möglich. Allgemein nachteilig ist, daß bei Sondermaschinen mit hoher Fertigungskapazität die Kapazität nicht bedarfsgerecht in Stufen erhöht oder gesenkt werden kann.

US 2004/0226154 A1 beschreibt ein Verfahren sowie eine Werkzeugmaschine zum Innen- und Außenbearbeiten von Werkstücken, insbesondere von Ausgleichsgehäusen, wobei die Außenbearbeitung über mehrere Spindeln mit jeweiligen Werkzeugen erfolgt und mit einer nach dem Pickup-Prinzip arbeitenden Werkstückspindel von einer Transporteinrichtung entnommen und mindestens einem drehangetriebenen Werkzeug zur Bearbeitung zugeführt werden kann.

Offenlegungsschrift DE 197 16 491 lehrt eine Werkzeugmaschine nach dem Oberbegriff von Anspruch 1 mit einer Spindel zur Aufnahme eines Werkzeugs für die Bearbeitung eines Werkstücks. Die Werkzeugmaschine umfaßt einen Werkzeugwechsler, durch den ein Bearbeitungswerkzeug durch ein Adapterwerkzeug gewechselt werden kann, wobei das Adapterwerkzeug mit einem Innenbearbeitungswerkzeug koppelbar ist und in diesem gekoppelten Zustand den Innenraum des Werkstücks bearbeiten kann.

Der Erfindung liegt die Aufgabe zugrunde, eine Vorrichtung mit den Merkmalen des Oberbegriffes des Anspruches 1 derart auszubilden, daß mit ihr ohne großen räumlichen Aufwand auch sehr komplexe Innenstrukturen von Werkstücken der in Frage stehenden Art bearbeitet werden können, wobei in nur einer Bearbeitungsstation unterschiedliche automatische wechsel bare Werkzeuge eingesetzt werden sollen, wobei die Kapazität der Maschine auf einfache Weise einem unterschiedlichen Bearbeitungsbedarf anpaßbar sein soll.

Diese Aufgabe wird durch die kennzeichnenden Merkmale des Anspruches 1 gelöst, vorteilhafte Weiterbildungen der Erfindung ergeben sich aus den Unteransprüchen.

Im Bereich der mindestens eine Bearbeitungsstation sowohl ein erstes als auch ein zweites Werkzeugmagazin anzuordnen. Das erste Werkzeugmagazin enthält eine Mehrzahl von Bearbeitungswerkzeugen und/oder Führungswerkzeugen für Innenwerkzeuge. Die Bearbeitungswerkzeuge des ersten Werkzeugmagazins dienen überwiegend der Außenbearbeitung des Werkstückes, die Führungsdome sind geeignet, Innenwerkzeuge aufzunehmen, die im weiteren Werkzeugmagazin enthalten sind. Das zweite Werkzeugmagazin enthält vorwiegend Innenbearbeitungswerkzeuge unterschiedlicher Art, die aus dem Werkzeugmagazin oder durch dieses durch eine Öffnung des Werkstückes in dessen Innenraum eingeführt werden können und dort durch mindestens einen eine weitere Öffnung des Werkstückes durchgreifenden Spanndom fixierbar sind.

Wenn im Zusammenhang mit der Erfindung von Werkzeugmagazinen gesprochen wird, so ist damit umfaßt, daß ein solches Werkzeugmagazin mindestens sechs, vorteilhafterweise aber auch deutlich mehr unterschiedliche Außen- und Innenbearbeitungswerkzeuge oder Führungsdorne für Innenwerkzeuge enthalten kann, um die vielfältigen Bearbeitungsaufgaben bewältigen zu können.

Die beiden Magazine liegen nebeneinander und ergänzen sich, was Führungsdome und Innenwerkzeuge anbelangt. Der Werkzeugwechsel kann durch die Vorrichtung problemlos automatisch vorgenommen werden. Besonders vorteilhaft an der Vorrichtung ist, daß Innen- und Außenbearbeitungsschritte an ein und derselben Bearbeitungsstation vorgenommen werden können. Damit lassen sich die Außenbearbeitung hochgenau zur Innenstruktur des Werkstückes tolerieren, was z.B. im Hinblick auf das Achsenkreuz eines Differentialgetriebegehäuse von besonderer Wichtigkeit ist.

Vorteilhafter Weise wird das zweite Werkzeugmagazin zentral oder mittig über dem aufgespannten Werkstück angeordnet. Die Werkzeuge können dann durch eine einfache nach unten gerichtete Bewegung eines Werkzeughaltearmes oder dergleichen oder durch eine Gesamtbewegung des Magazins nach unten in den Innenraum des Werkstückes durch eine nach oben weisende Öffnung eingebracht werden. Es liegt aber auch im Rahmen der Erfindung, das Werkzeugmagazin, das vorteilhafterweise eine drehbare Werkzeughaltescheibe oder einen drehbaren Werkzeughaltestern aufweist, in gleicher Höhe mit dem aufgespannten Werkstück anzuordnen und durch im wesentlichen horizontal verlaufende Werkzeugzustellbewegungen die entsprechenden Werkzeuge im Innenbereich des Werkstückes zu platzieren.

Vorteilhafterweise ist im Bearbeitungsbereich eine zweite Spindel vorhanden. Über der zweiten Spindel ist in diesem Fall ein drittes Werkzeugmagazin angeordnet, das z.B. Führungsdome und Außenbearbeitungswerkzeuge entsprechend dem ersten Werkzeugmagazin enthalten kann.

In vorteilhafter Weiterbildung der Erfindung ist auf dem Maschinengestell ein Rundtisch angeordnet, der um eine vertikal verlaufende Achse drehbar ist und auf dem die Spannvorrichtung zur Aufnahme des Werkstückes befestigt ist. Der Rundtisch kann zwischen dem Bearbeitungsbereich und einer Beladestation verfahren werden.

Die Bearbeitungsspindeln eines Bearbeitungsbereiches fluchten miteinander oder sind zumindest in eine miteinander fluchtenden Bearbeitungsstellung bringbar. Dies schließt ein, daß die Schlitten, die die Bearbeitungsspindeln tragen, nicht nur auf das Werkstück zugestellt werden können, sondern in mindestens einer Ebene, die rechtwinklig zur Spindellängsachse verläuft, verstellt oder verfahren werden können. Dadurch ergeben sich noch vielfältigere Bearbeitungsmöglichkeiten.

Der Rundtisch kann rechtwinklig zur Längsachse der Bearbeitungsspindel verfahrbar auf dem Maschinengestell angeordnet werden. Durch Verfahren des Rundtisches, der per Definition um seine Vertikalachse drehbar ist, kann das Werkstück in jede beliebige Lage zu den Bearbeitungsspindeln gebracht werden. Dadurch sind die Bearbeitungsmöglichkeiten im Außen- und Innenbereich des Werkstückes weiter verbessert.

Wird die Spannvorrichtung mittels eines an sich bekannten Nullpunkt-Spannsystemes auf dem Rundtisch befestigt, vereinfacht dies die Reproduzierbarkeit von einzelnen Bearbeitungsschritten.

Grundsätzlich ist es auch möglich, im Bereich des Maschinengestells ein mit dem Rundtisch zusammenwirkendes automatisches Palettenwechselsystem vorzusehen. Dadurch können Paletten mit Spannsystemen auf dem Rundtisch fixiert werden, wodurch sich die Bearbeitungskapazität der Vorrichtung bei Bedarf steigern läßt. Die Werkstücke können auf den Paletten vorgespannt werden und dann zusammen mit den Paletten in den Bearbeitungsbereich eingefahren werden.

Grundsätzlich ist es auch möglich, auf dem Maschinengestell eine Mehrzahl von Rundtischen vorzusehen und diesen Rundtischen mehrere Bearbeitungsstationen zuzuordnen. Dann können an ein und derselben Maschine unterschiedliche Bearbeitungsvorgänge aufeinander abgestimmt werden, so daß sich der Bearbeitungsdurchsatz insgesamt erhöht. Die Werkzeugmagazine können in einer weiterentwickelten Version der Vorrichtung über unterschiedliche Bearbeitungsstationen verfahren werden. Dadurch ergeben sich erweiterte Bearbeitungsmöglichkeiten, weil für unterschiedliche Bearbeitungsstationen nicht Werkzeugmagazine mit identischen Werkzeugen vorgesehen werden müssen. Die Werkzeugmagazine sind dadurch flexibler einsetzbar und besser nutzbar.

Um den Bearbeitungsprozeß bei erforderlichen Magazinumrüstungen nicht stoppen zu müssen, ist es im Rahmen der Erfindung vorteilhaft möglich, die Werkzeugmagazine von einer Arbeitsposition über den Werkstücken oder den Bearbeitungsstationen in mindestens eine Umrüstposition zu verfahren. Grundsätzlich ist es dabei möglich, pro Bearbeitungsbereich mit zwei Spindeln nicht nur die erfindungsgemäßen drei Werkzeugmagazine vorzusehen, sondern z.B. zwei weitere, die in einer Umrüst-Parkposition sind und sehr schnell durch Einschieben in den Bearbeitungsbereich gegen Werkzeugmagazine mit anderen Werkzeugen oder verschlissenen Werkzeugen ausgetauscht werden können. Dazu sind die Werkzeugmagazine über dem Maschinengestell an mindestens einer Führungsanordnung verfahrbar gehalten.

Was die Ausbildung der Werkzeugmagazine anbelangt, so können diese grundsätzlich sternförmig ausgebildet sein, d.h. in einer Ebene sind um eine Drehachse sternförmig z.B. sechs oder acht Werkzeuge angeordnet, die aufgrund ihrer Stemanordnung in den Innenbereich des Werkstückes oder an einen Außenbereich des Werkstückes ein- bzw. heranfahrbar sind. Wird ein Werkzeugmagazin gemäß der Erfindung allerdings scheibenartig ausgebildet, insbesondere mit einer Werkzeugträgerscheibe, an welcher die Werkzeuge radial verschiebbaren Werkzeugarmen angeordnet sind und wird mindestens ein motorisch antreibbares Werkzeugförderelement vorgesehen, das ein an einem Werkzeugarm angeordnetes Werkzeug von einer radial inneren Parkposition in eine radial äußere Übergabeposition verfahren kann, dann lassen sich weit mehr als sechs oder acht Werkzeuge an bzw. in einem solchen Werkzeugmagazin anordnen. Durch das radiale Herausfahren des Werkzeuges stören die nicht ausgefahrenen Werkzeuge nicht, so daß die Werkzeuge auf der Peripherie der Werkzeugträgerscheibe relativ eng nebeneinander liegend angeordnet werden können. Die radial äußere Übergabeposition entspricht der Position, in welcher ein Kupplungselement einer Bearbeitungsspindel das Werkzeug aufnimmt bzw. aufgenommen hat. Diese Position kann auch als Arbeitsstellung des Werkzeuges bezeichnet werden.

Die mit den radialen Führungen oder Schlitzen versehene Werkzeugträgerscheibe hat einen motorischen Drehantrieb, der durch eine mit der Vorrichtung verbundene Steuerungsvorrichtung verbunden ist. Alle Zustell- und Bearbeitungsbewegungen der Vorrichtung werden von dieser Steuerungsvorrichtung in an sich bekannter Weise überwacht bzw. gesteuert.

Die Werkzeughaltearme, die an der Werkzeugträgerscheibe angeordnet sind, sind mit Gleitelementen in radialen Schlitzen oder an den radialen Führungen der Werkzeughaltescheibe geführt. Parallel zu der Werkzeugträgerscheibe kann mit Vorteil eine mit einer Ringnut versehene nicht drehbare Gegenscheibe vorgesehen werden, wobei die Ringnut mit einer zur Bearbeitungsposition verlaufende Durchbrechung versehen ist. In Parkposition der Werkzeuge, d.h. in der eingezogenen radial inneren Position liegt jeweils ein Mitnahmeelement der Werkzeughaltearme in der Ringnut, so daß Fliehkräfte beim Verdrehen der Scheibe sicher aufgefangen werden können. Bei Rotation der Werkzeugträgerscheibe laufen die Mitnahmeelemente der Werkzeughaltearme in der Ringnut der Gegenscheibe um.

Das an der Trägerscheibe angeordnete Werkzeugförderelement hat ein Greifelement, mit welchem es in einer radial inneren Aufnahmeposition ein Mitnahmeelement eines der Werkzeughaltearme umgreift und dadurch diesen in Richtung der Übergabeposition verschieben kann. Grundsätzlich ist es möglich, ein Werkzeugförderelement für alle Werkzeuge eines Magazins vorzusehen, in Weiterbildung der Erfindung lassen sich aber auf der Werkzeugträgerscheibe für jeden Werkzeughaltearm gesonderte Werkzeugfördervorrichtungen vorsehen. Die Mitnahmeelemente sind vorteilhafterweise als Kurvenrollen ausgebildet, die bei Drehung der Werkzeugträgerscheibe in der Ringnut abrollen.

Die Ringnut weist eine Durchbrechung auf, die bei Rotation der Werkzeugträgerscheibe durch einen Schieber verschlossen werden kann, so daß die Mitnahmeelemente (Kurvenrollen) ohne Störung in der Werkzeugträgerscheibe umlaufen können. Soll ein Werkzeug aus dem Magazin ausgefahren werden, dann wird durch den Schieber die Durchbrechung der Ringnut geöffnet und ein Werkzeughaltearm kann mit seinem Mitnahmeelement die Ringnut der Gegenscheibe verlassen, wodurch er in Richtung des Werkstückes ausgefahren werden kann.

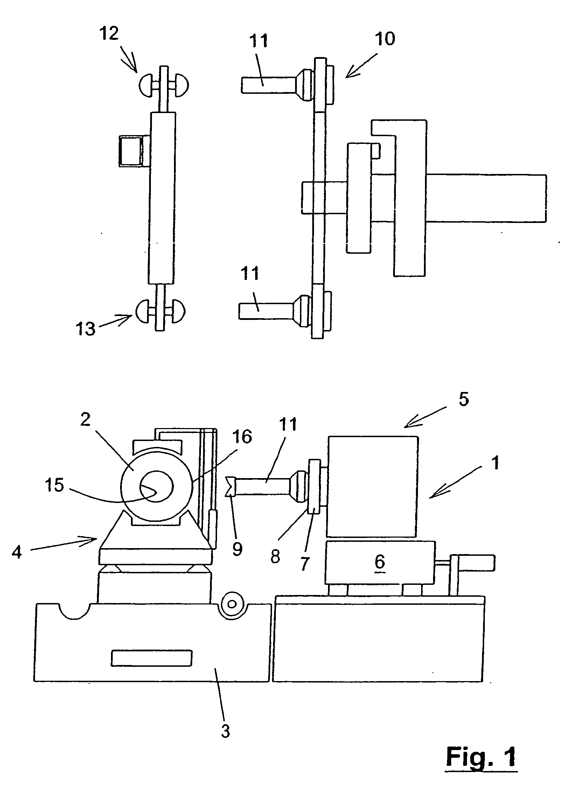

Die Erfindung ist anhand vorteilhafter Ausführungsbeispiele in den Zeichnungsfiguren näher erläutert. Diese zeigen
- Fig. 1: eine schematische Seitenansicht einer Vorrichtung mit einer Bearbeitungsstation und einer Spindel sowie zwei Werkzeugmagazinen,

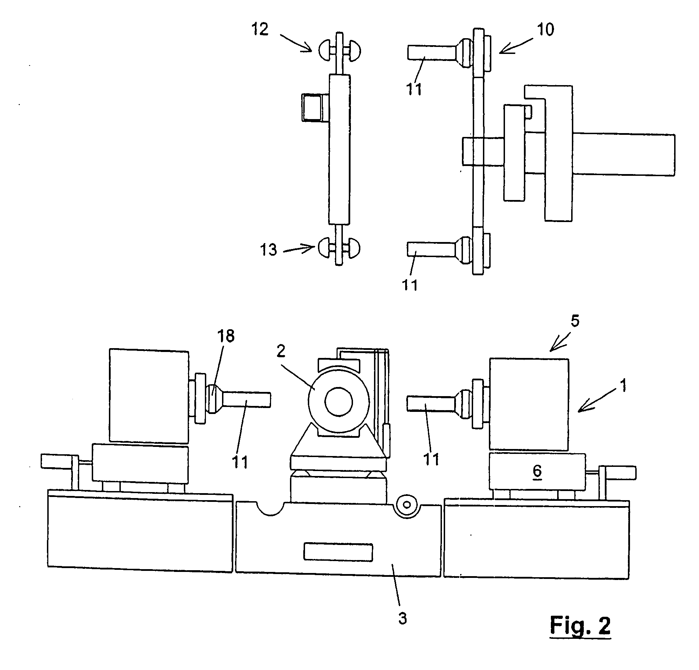

- Fig. 2: eine erweiterte Ausführungsform einer Vorrichtung mit einer Bearbeitungsstation, zwei Werkzeugmagazinen und zwei Spindeln;

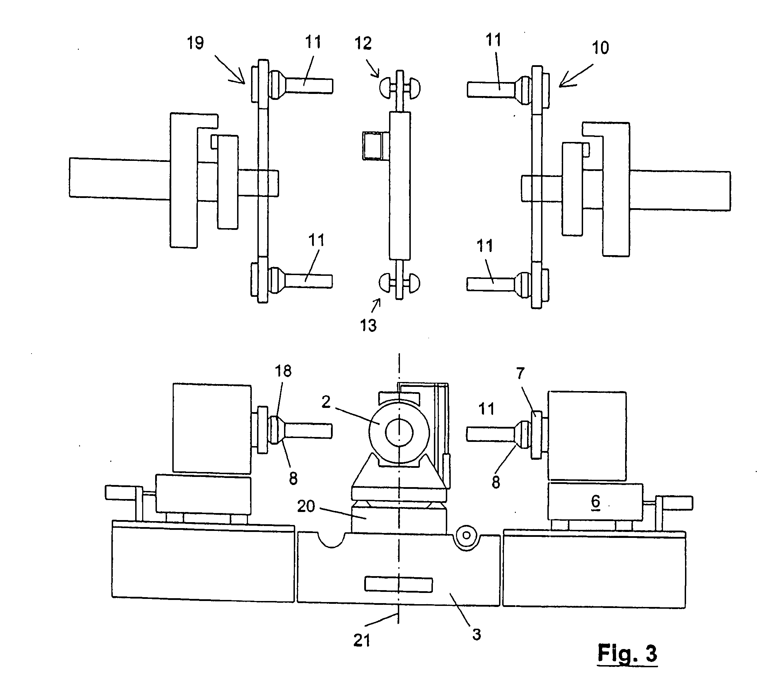

- Fig. 3: eine Vorrichtung gemäß Fig. 2, bei der über der zweiten Spindel ein weiteres Werkzeugmagazin angeordnet ist;
- Fig. 4: eine Teilansicht des mittleren Werkzeugmagazins, bei in Fig. 4a das untere Werkzeug in radial ausgefahrener Stellung und in Fig. 4b das untere Werkzeug in radial eingefahrener Stellung angeordnet ist;

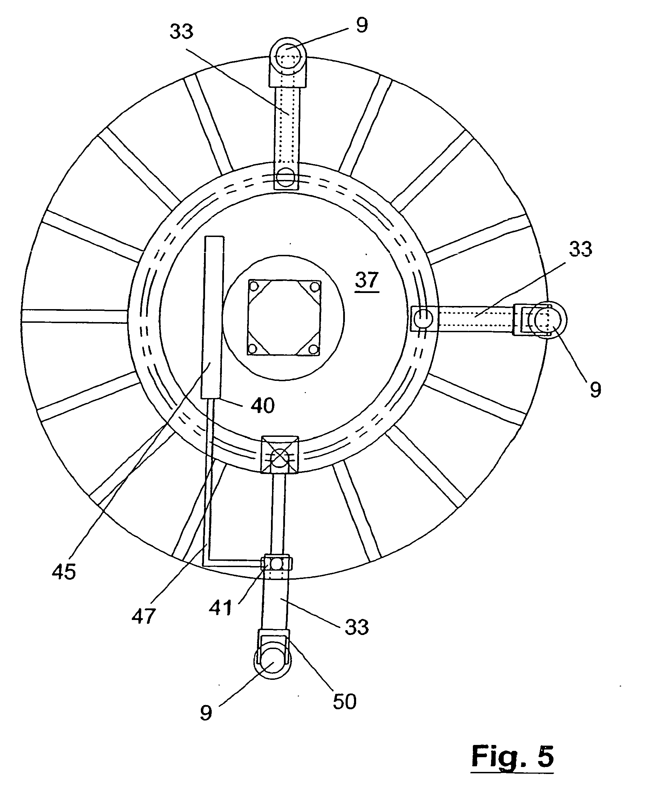

- Fig. 5: eine Darstellung in Pfeilrichtung V in Fig. 4a;
- Fig. 6: eine Draufsicht auf die Vorrichtung gem. Fig. 3, allerdings ohne Werkzeugmagazin;
- Fig. 7: eine schematische Ansicht in Pfeilrichtung VII in Fig. 6;
- Fig.8: eine schematische Draufsicht auf eine Vorrichtung mit angeschlossenem Rundpalettenspeicher;
- Fig. 9: eine schematische Draufsicht auf die Vorrichtung mit einem Linearpalettenspeicher.

Die Vorrichtung 1 zum Bearbeiten von Werkstücken 2 weist ein Maschinengestell 3 auf, auf dem eine Spannvorrichtung 4 zur Aufnahme des Werkstückes angeordnet ist. Auf dem Maschinengestell 3 ist eine Bearbeitungsstation 5 vorgesehen, die mindestens eine gegen das aufgespannte Werkstück 2 zustellbare, auf einen Schlitten 6 angeordnete motorisch angetriebene Bearbeitungsspindel 7 umfaßt, die mittels eines an ihrem freien Ende 8 angeordneten Werkzeuges 9 Innen- und Außenbereiche des Werkstückes 2 bearbeiten kann.

Im Bereich der mindestens einen Bearbeitungsstation 5 ist ein erstes Werkzeugmagazin 10 angeordnet, in oder an welchem eine Mehrzahl von Bearbeitungswerkzeugen 9 und/oder Führungsdome 11 für unterschiedliche Bearbeitungswerkzeuge aufgenommen sind. Das erste Werkzeugmagazin ist ganz oder teilweise zur Bearbeitungsspindel 7 verfahrbar, um Bearbeitungswerkzeuge 9 oder Führungsdorne 11 auf der Bearbeitungsspindel 7 zu plazieren. Sodann ist über der Bearbeitungsstation 5 ein zweites Werkzeugmagazin 12 angeordnet, in oder an welchem Innenbearbeitungswerkzeuge 13 enthalten sind, die aus dem Werkzeugmagazin 12 oder durch dieses selbst durch eine Öffnung 14 des Werkstückes 2 in dessen Innenraum 15 einführbar sind. Dort werden sie durch einen eine weitere Öffnung 16 durchgreifenden Führungsdorn 11 aufgenommen und fixiert, so daß mit dieser Führungsdorn/Werkzeugkonstellation mittels der ersten Spindel die Innenbearbeitung des Werkstückes 2 vorgenommen werden kann.

Das zweite Werkzeugmagazin 12 ist mittig über dem aufgespannten Werkstück 2 angeordnet, so daß eine einfache nach unten gerichtete Bewegung des Werkzeugmagazins oder eines Werkzeughalteelementes das Werkzeug 9 in den Innenraum 15 des Werkzeuges eingefahren werden kann.

Bei dem in Zeichnungsfigur 2 dargestellten Ausführungsbeispiel umfaßt die Bearbeitungsstation 5 eine zweite Bearbeitungsspindel 18. Wird über der zweiten Bearbeitungsspindel 18 ein drittes Werkzeugmagazin 19 angebracht, so können auch auf der zweiten Bearbeitungsspindel Führungsdorne 11 unterschiedlicher Art angeordnet und gewechselt werden sowie auch im Bereich der zweiten Bearbeitungsspindel 18 Außenbearbeitungswerkzeuge montiert werden.

Auf dem Maschinengestell 3 ist ein Rundtisch 20 angeordnet, der um eine vertikal verlaufende Achse 21, die sogenannte B-Achse verdreht werden kann. Der Rundtisch 20 ist auf einem Schlitten 22 befestigt, der auf Führungselementen 23, z.B. einem Prismenbett rechtwinklig zur Längsrichtung der Bearbeitungsspindeln, d.h. in X-Richtung zwischen einer Bearbeitungsposition 24 und einer Beladestation 25 verfahren werden kann. Die Spannvorrichtung 4 zur Aufnahme des Werkstückes 2 ist auf dem Rundtisch 20 angeordnet, damit ist das Werkstück 2 sowohl linear verschiebbar als auch drehbar. Grundsätzlich ist es möglich, den Rundtisch 20 auch anzuheben oder abzusenken, so daß über die Bearbeitungsspindeln an dem Werkstück 2 auch komplexe Bohrbilder bearbeitet werden können. Die Spannvorrichtung 4 umfaßt Spannprismen, die auch komplexe Werkstücke mit einer einer Kugel angenäherten Form sicher spannen können.

Grundsätzlich ist es möglich, das Maschinengestell 3 auch in einer verlängerten Form auszuführen, so daß auf einem Maschinengestell mehrere Rundtische 20 mit einer entsprechenden Mehrzahl von Beladestationen 25 vorgesehen werden können.

Jede Bearbeitungsspindel 7 ist an einem auf das Werkstück 2 zustellbaren Bearbeitungsschlitten 26 montiert. Die Zustellrichtung der Bearbeitungsschlitten 26 wird als Z-Achse bezeichnet. Grundsätzlich ist es möglich, die Bearbeitungsspindeln 7 mit dem Bearbeitungsschlitten 26 auch in vertikaler Richtung, d.h. in Y-Achse verfahrbar zu gestalten.

Wie eingangs bereits erläutert, sind über der Bearbeitungsstation 5 bzw. den Bearbeitungsstationen Werkzeugmagazine angeordnet, auf die nunmehr näher eingegangen wird.

Das erste Werkzeugmagazin 10 und das dritte Werkzeugmagazin 19 können im wesentlichen identische ausgebildet sein, bedeutungsvoll ist, daß ihre Ausbildung die Anordnung von übernehmbaren Führungsdomen 11 und Außenbearbeitungswerkzeugen erlaubt. Alle Werkzeugmagazine 10, 12 und 19 sind entweder als Ganzes auf das Werkstück 2 zustellbar oder Bereiche oder Arme der Werkzeugmagazine fahren aus dem drehbar angeordneten Werkzeugmagazinen aus und stellen so das selektierte Bearbeitungswerkzeug 9 auf oder in das Werkstück zu, so daß die Bearbeitungsspindel 7 mit einem entsprechend ausgewählten Führungsdorn das Werkzeug aufnehmen und drehfixieren kann. Die Werkzeugmagazine 10, 12 und 19 sind scheiben- oder stemartig ausgebildet und vorzugsweise parallel angeordnet.

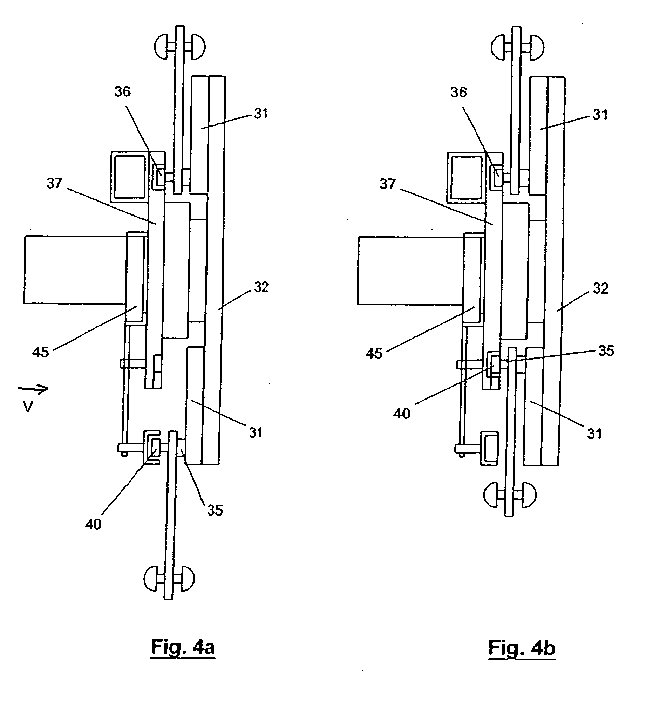

In besonders vorteilhafter Ausführungsform weist das zweite Werkzeugmagazin 12 eine mit radialen Schlitzen oder sonstigen Führungen 31 versehene Werkzeugträgerscheibe 32 auf, an welcher die Bearbeitungswerkzeuge 9 an radial verschiebbaren Werkzeughalteelementen 17 in Form von Werkzeugarmen 33 angeordnet sind. Zur radialen Ausfahrbewegung und Einzugsbewegung ist mindestens ein motorisch angetriebenes Werkzeugförderelement 34 vorgesehen, das ein an einem Werkzeugarm 33 angeordnetes Bearbeitungswerkzeug 9 von einer radial inneren Parkposition (Fig. 4b) in eine radial äußere Übergabeposition (Fig. 4a) verfährt. In der radial äußeren Übergabeposition ist das Bearbeitungswerkzeug 9 in einer mit den Bearbeitungsspindeln 7, 18 fluchtenden Bearbeitungsposition angeordnet und wird von einem Kupplungselement einer Bearbeitungsspindel bzw. eines Führungsdomes 11 aufgenommen.

Um unterschiedliche Bearbeitungswerkzeuge 9 auszuwählen, ist die mit den radialen Schlitzen oder Führungen 31 versehene Werkzeugträgerscheibe 32 motorisch drehbar und kann über eine elektronische Maschinensteuerung in eine bestimmte Selektions-Übergabeposition verfahren werden.

Die Werkzeughaltearme 33 sind mit Gleitelementen 35 in den radialen Führungen 31 der Werkzeughaltescheibe 32 geführt.

Um einen sicheren Halt der Werkzeughaltearme 33 bei Rotation der Werkzeugträgerscheibe 32 zu gewährleisten, ist parallel zur Werkzeugträgerscheibe 32 eine mit einer Ringnut 36 versehene, nicht drehbare Gegenscheibe 37 angeordnet, wobei die Ringnut 36 mit einer zur Bearbeitungsposition hinverlaufenden Durchbrechung 38 versehen ist. Mitnahmeelemente 40, die mit den Gleitelementen 35 der Werkzeughaltearme zusammenwirken, sind in Parkposition der Bearbeitungswerkzeuge 9 in der Ringnut 36 angeordnet. In Parkposition ist in der Durchbrechung 38 ein klauenartiges bewegliches Kulissensegment 41 des Werkzeugförderelementes 34 angeordnet, so daß umlaufende Mitnahmeelemente 40 durch das Kulissensegment hindurchlaufen können. Wird ein Werkzeughaltearm 33 bzw. ein Mitnahmeelement 40 zum Ausfahren aus der Werkzeugträgerscheibe in der Durchbrechung 38 und damit in dem Kulissensegment 41 angehalten, so kann das Kulissensegment das Werkzeug durch das Mitnahmeelement 40 an seinem Werkzeughaltearm 33 nach radial außen in Richtung der Übergabeposition herausziehen. Es liegt auch im Rahmen der Erfindung, an der Werkzeügträgerscheibe für jeden Werkzeughaltearm 33 ein gesondertes Werkzeugförderelement 34 anzuordnen. In diesem Fall kann auf die umlaufende Ringnut und eine entsprechende Einkopplung der Mitnahmeelemente 40 in das Kulissensegment 41 nur eines Werkzeugförderelementes 34 verzichtet werden. Für eine sichere Rastung der Werkzeuge in Parkposition ist dann auf andere Weise Sorge zu tragen. Grundsätzlich liegt es auch im Rahmen der Erfindung, die Durchbrechung 38 der Ringnut 36 der Gegenscheibe 37 bei Rotation der Werkzeugträgerscheibe durch einen gesonderten Schieber zu verschließen und das Kulissensegment 41 erst nach Entfernen des Schiebers in die Durchbrechung 38 einzuführen oder das Mitnahmeelement 40 auf andere Weise an das Kulissensegment 41 anzukoppeln.

Zur störungsfreien und paßgenauen Aufnahme der Werkzeuge auf den Bearbeitungsspindeln bzw. Führungsdomen können an den Werkzeughaltearmen 33 Leitungen und/oder Düsen zur Zuführung von Kühl-, Schmier- oder Reinigungsmedien an die entsprechenden mechanischen Schnittstellen zwischen Werkzeug und Führungsdomen zugeführt werden.

Aus Zeichnungsfigur 5 sind noch einige schematische Details des Werkzeugförderelementes 34 entnehmbar. Das Förderelement besteht im wesentlichen aus einem Druckluftzylinder 45, der auf der Gegenscheibe 37 befestigt ist und aus dessen unteren Ende 46 eine Kolbenstange 47 ausfahrbar ist, die an ihrem unteren Ende das bewegliche Kulissensegment 41 trägt. Aus Gründen der Vereinfachung sind in Zeichnungsfigur 5 nur drei Werkzeughaltearme dargestellt. An ihren radial äußeren Enden tragen die Werkzeughaltearme 33 Greifer 50, die zum Aufnehmen und Abgeben der Werkzeuge 9 geeignet sind.

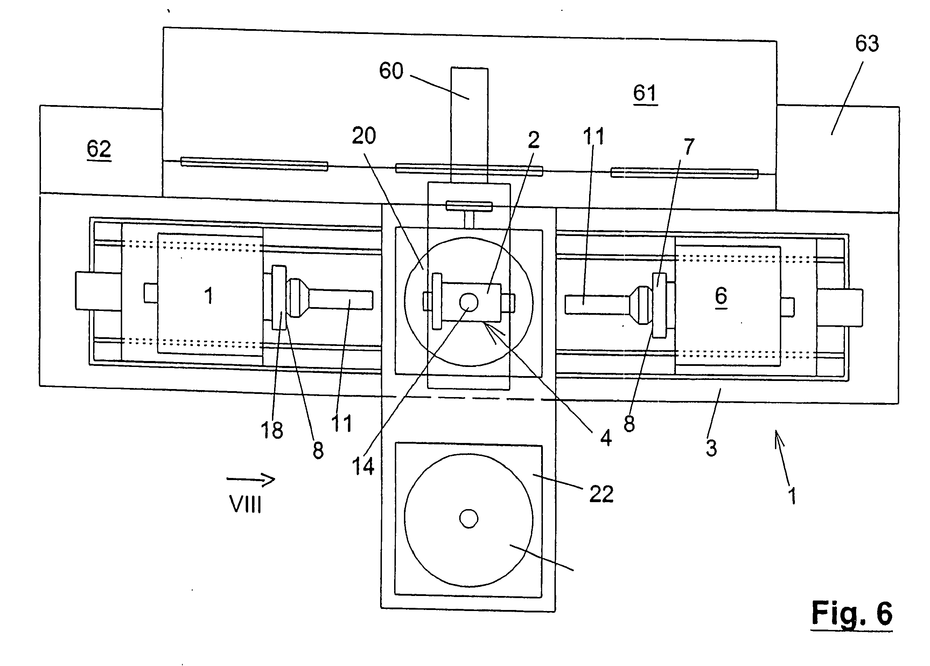

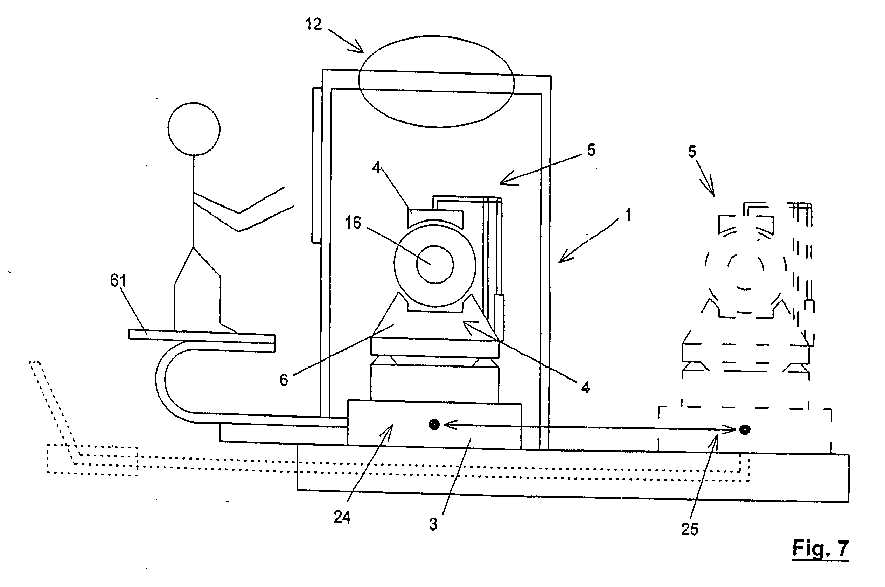

In Fig. 6 sind noch ein Motor 60 und ein begehbares Podest 61, ein Hydraulikgerüst 62 und ein elektrischer Schaltschrank 63 angedeutet, wobei diese Elemente natürlich auch anders und an anderer Stelle angeordnet werden können. In Fig. 7 ist noch einmal das begehbare Podest 61 mit einer Bedienungsperson zu sehen, die durch eine verschließbare Öffnung eines Gehäuses rund um den Bearbeitungsbereich Wechselarbeiten an einem Werkzeugmagazin 12 vornimmt.

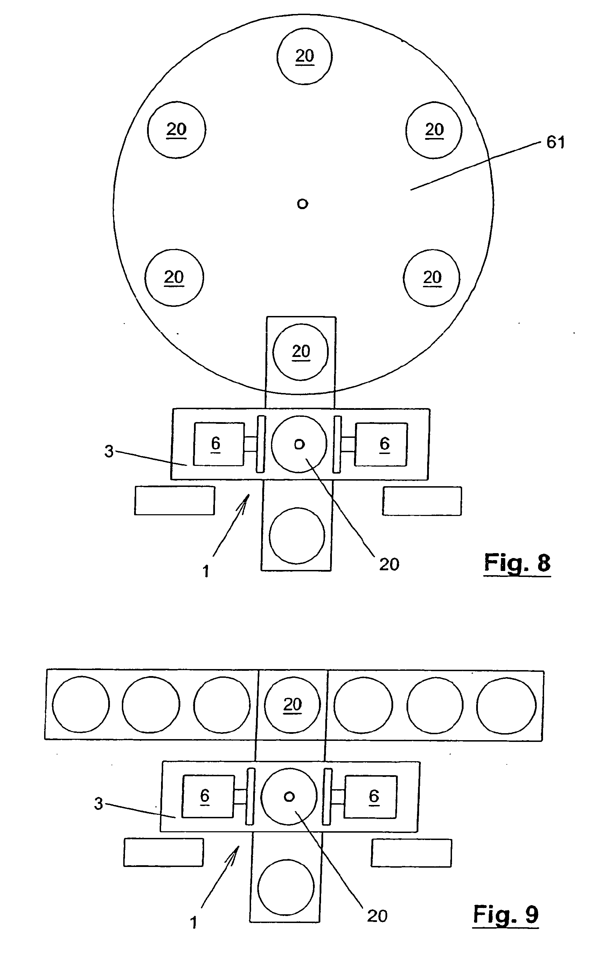

Die schematische Draufsicht gem. Fig. 8 zeigt noch einen Rundpalettenspeicher 70, der in Verbindung mit der Vorrichtung 1 eingesetzt werden kann. In Fig. 9 ist ein Linearpalettenspeicher 80 in Verbindung mit der Vorrichtung 1 angedeutet.

## Patentansprüche

1. Vorrichtung (1) zur Bearbeitung von Werkstücken (2), insbesondere zur Innenbearbeitung von Differentialgetriebegehäusen oder sonstigen Gehäusen, die im Innenbereich oder im Öffnungsbereich eine Mehrzahl von Lagersitzen aufweisen, mit
- einem Maschinengestell (3),
- einer auf dem Maschinengestell (3) angeordneten Spannvorrichtung (4) zur Aufnahme des Werkstückes (2),
- mindestens einer auf dem Maschinengestell (3) angeordneten Bearbeitungsstation (5), die.
-- mindestens eine gegen das aufgespannte Werkstück (2) zustellbare, auf einem Schlitten (6) angeordnete Bearbeitungsspindel (7) umfaßt, die mittels eines an ihrem freien Ende (8) angeordneten Werkzeuges (9) Innen- oder Außenbereiche des Werkstückes (2) bearbeitet, wobei
- im Bereich der mindestens einen Bearbeitungsstation (5) ein erstes Werkzeugmagazin (10) angeordnet ist,
-- in welchem eine Mehrzahl von Bearbeitungswerkzeugen (9) und/oder Führungsdornen (11) für Innenwerkzeuge (13) aufgenommen sind und
-- das ganz oder teilweise zur Bearbeitungsspindel (7) verfahrbar ist, um Bearbeitungswerkzeuge (9) und/oder Spanndorne auf der Bearbeitungsspindel (7) anzuordnen sowie ein Innenbearbeitungswerkzeug (13) durch eine Öffnung (14) des Werkstückes (2) in dessen Innenraum (15) einführbar und
-- dort durch mindestens einen eine weitere Öffnung (16) des Werkstückes (2) durchgreifenden Spanndorn fixierbar ist,
**dadurch gekennzeichnet, daß**
- ein zweites Werkzeugmagazin (12) angeordnet ist,
-- in/an welchem Innenbearbeitungswerkzeuge (13) enthalten sind und
- mindestens ein Werkzeugmagazin (12) eine mit radialen Schlitzen oder Führungen (31) versehene Werkzeugträgerscheibe (32) aufweist, an welcher die Werkzeuge (9) an radial verschiebbaren Werkzeughaltearmen (33) angeordnet sind und mindestens ein motorisch antreibbares Werkzeugförderelement (34) vorgesehen ist, das ein an einem Werkzeughaltearm (33) angeordnetes Werkzeug (9) von einer radialen inneren Parkposition in eine radial äußere Übergabeposition verfährt.

2. Vorrichtung nach Anspruch 1,
**dadurch gekennzeichnet, daß**
das weitere Werkzeugmagazin (12) mittig über dem aufgespannten Werkstück (2) angeordnet ist.

3. Vorrichtung nach Anspruch 1 oder 2,
**dadurch gekennzeichnet, daß**
die Bearbeitungsstation (5) eine zweite Spindel (18) umfaßt und ein drittes Werkzeugmagazin (19) im Bereich der zweiten Spindel (18) angeordnet ist.

4. Vorrichtung nach einem der Ansprüche 1 - 3,
**dadurch gekennzeichnet, daß**
auf dem Maschinengestell (3) ein Rundtisch (20) angeordnet ist, der um eine vertikal verlaufende Achse (21) drehbar ist und auf dem die Spannvorrichtung zur Aufnahme des Werkstückes (2) befestigt ist.

5. Vorrichtung nach einem der Ansprüche 1-3,
**dadurch gekennzeichnet, daß**
beide Bearbeitungsspindeln (7, 18) miteinander fluchten oder in eine miteinander fluchtende Bearbeitungsstellung bringbar sind.

6. Vorrichtung nach Anspruch 5,
**dadurch gekennzeichnet, daß**
die freien Enden (8) der Bearbeitungsspindeln (7, 18) oder der Führungsdome (11) zur Aufnahme eines Innenwerkzeuges geeignete Kupplungskonturen aufweisen.

7. Vorrichtung nach einem der vorhergehenden Ansprüche,
**dadurch gekennzeichnet, daß**
die Bearbeitungsspindeln (7, 18) der beiden Bearbeitungsstationen simultan in Spindellängsrichtung verfahrbar sind.

8. Vorrichtung nach einem der vorhergehenden Ansprüche,
**dadurch gekennzeichnet, daß**
die Bearbeitungsspindeln (7, 18) der beiden Bearbeitungsstationen simultan in mindestens einer rechtwinklig zur Spindellängsachse verlaufenden Ebene verstellbar oder verfahrbar angeordnet sind.

9. Vorrichtung nach Anspruch 4,
**dadurch gekennzeichnet, daß**
der Rundtisch (20) rechtwinklig zur Längsachse der Bearbeitungsspindeln (7, 18) verfahrbar auf dem Maschinengestell (3) angeordnet ist.

10. Vorrichtung nach Anspruch 4,
**dadurch gekennzeichnet, daß**
die Spannvorrichtung (4) mittels eines Nullpunkt-Spannsystemes auf dem Rundtisch (20) befestigt ist.

11. Vorrichtung nach Anspruch 4,
**dadurch gekennzeichnet, daß**
im Bereich des Maschinengestells (3) ein mit dem Rundtisch (20) zusammenwirkendes automatisches Palettenwechselsystem vorgesehen ist.

12. Vorrichtung nach einem der vorhergehenden Ansprüche,
**dadurch gekennzeichnet, daß**
auf dem Maschinengestell (3) eine Mehrzahl von Rundtischen (20) angeordnet ist, die räumlich einer Mehrzahl von Bearbeitungsstationen (5) zugeordnet sind.

13. Vorrichtung nach einem der vorhergehenden Ansprüche,
**dadurch gekennzeichnet, daß**
das erste Werkzeugmagazin (10) und/oder das zweite (12) und/oder das dritte Werkzeugmagazin (19) über unterschiedliche Bearbeitungsstationen (5) und/oder aufgespannte Werkstücke (2) verfahrbar und im Zusammenhang mit diesen einsetzbar ist.

14. Vorrichtung nach einem der vorhergehenden Ansprüche,
**dadurch gekennzeichnet, daß**
an dem Maschinengestell (3) wenigstens eine Beladestation (25) angeordnet ist.

15. Vorrichtung nach einem der vorhergehenden Ansprüche,
**dadurch gekennzeichnet, daß**
die Beladestation (25) einen mit einer Spannvorrichtung versehenen Rundtisch (20) aufweist, der von einer Beladeposition in eine Bearbeitungsposition verfahrbar ist.

16. Vorrichtung nach einem der vorhergehenden Ansprüche,
**dadurch gekennzeichnet, daß**
die Werkzeugmagazine (10, 12, 19) von einer Arbeitsposition über dem/den Werkstück(en) (2) und/oder der/den Bearbeitungsstation(en) in mindestens eine Umrüstposition verfahrbar sind.

17. Vorrichtung nach einem der vorhergehenden Ansprüche,
**dadurch gekennzeichnet, daß**
die Werkzeugmagazine (10, 12, 19) über dem Maschinengestell (3) an mindestens einer Führungsanordnung gehalten sind.

18. Vorrichtung nach einem der vorhergehenden Ansprüche,
**dadurch gekennzeichnet, daß**
mehr als drei scheiben- oder sternartige Werkzeugmagazine (10, 12, 19) zwei Spindelstationen und einem mittig dazwischen aufgespannten Werkstück (2) zugeordnet sind.

19. Vorrichtung nach einem der vorhergehenden Ansprüche,
**dadurch gekennzeichnet, daß**
das Werkzeug (9) in der radial äußeren Übergabeposition in einer mit wenigstens einer Bearbeitungsspindel (7) fluchtenden Bearbeitungsposition angeordnet und von einem Kupplungselement einer Bearbeitungsspindel aufgenommen ist.

20. Vorrichtung nach einem der vorhergehenden Ansprüche,
**dadurch gekennzeichnet, daß**
die mit den radialen Führungen (31) versehene Werkzeugträgerscheibe (32) motorisch drehbar angeordnet ist.

21. Vorrichtung nach einem der vorhergehenden Ansprüche,
**dadurch gekennzeichnet, daß**
die Werkzeughaltearme (33) mit Gleitelementen (35) in/an den radialen Führungen (31) der Werkzeugträgerscheibe (32) geführt sind.

22. Vorrichtung nach einem der vorhergehenden Ansprüche,
**dadurch gekennzeichnet, daß**
parallel zur Werkzeugträgerscheibe (32) eine mit einem ringartigen Führungselement oder einer Ringnut (36) versehene, nicht drehbare Gegenscheibe (37) angeordnet ist, deren Führungselement oder Ringnut (36) mit einer zur Bearbeitungsposition verlaufenden Durchbrechung (38) versehen ist, wobei in Parkposition der Werkzeuge (9) ein Mitnahmeelement (40) der Werkzeughaltearme (33) in der Ringnut (36) angeordnet ist.

23. Vorrichtung nach Anspruch 22,
**dadurch gekennzeichnet, daß**
bei Rotation der Werkzeugträgerscheibe (32) die Mitnahmeelemente (40) der Werkzeughaltearme (33) an dem Führungselement oder in der Ringnut (36) der Gegenscheibe (37) umlaufen.

24. Vorrichtung nach einem der vorhergehenden Ansprüche,
**dadurch gekennzeichnet, daß**
das an der Trägerscheibe (32) angeordnete Werkzeugförderelement (34) in einer radial inneren Aufnahmeposition mit einem Greifer (41) ein Mitnahmeelement (40) eines Werkzeughaltearmes (33) umgreift und diesen radial nach außen in Richtung der Übergabeposition verschiebt.

25. Vorrichtung nach einem der vorhergehenden Ansprüche,
**dadurch gekennzeichnet, daß**
auf der Werkzeugträgerscheibe (32) für jeden Werkzeughaltearm (33) ein gesondertes Werkzeugförderelement (34) angeordnet ist.

26. Vorrichtung nach einem der vorhergehenden Ansprüche,
**dadurch gekennzeichnet, daß**
die Mitnahmeelemente (40) als Kurvenrollen ausgebildet sind, die bei Drehung der Werkzeugträgerscheibe (32) in der Ringnut (36) abrollt.

27. Vorrichtung nach einem der vorhergehenden Ansprüche,
**dadurch gekennzeichnet, daß**
die Durchbrechung (38) der Ringnut (36) der Gegenscheibe (37) bei Rotation der Werkzeugträgerscheibe (32) durch einen Schieber verschließbar ist.

28. Vorrichtung nach einem der vorhergehenden Ansprüche,
**dadurch gekennzeichnet, daß**
an jedem Werkzeughaltearm (33) Leitungen und/oder Düsen zur Zuführung von Kühl-, Schmier- oder Reinigungsmedien an die mechanische Schnittstelle zwischen dem Kupplungsende der Bearbeitungsspindeln bzw. Führungsdorne und dem Werkzeug (9) angeordnet sind.

## Claims

1. Apparatus (1) for processing workpieces (2), more especially for the internal processing of differential transmission housings or other types of housings, which have a plurality of bearing seats in the internal region or in the aperture region, said apparatus having
- a machine frame (3),
- a clamping apparatus (4), disposed on the machine frame (3), for accommodating the workpiece (2),
- at least one processing station (5), which is disposed on the machine frame (3), and which includes
- at least one processing spindle (7), which can be fed towards the clamped-on workpiece (2), is disposed on a slide (6), and processes internal or external regions of the workpiece (2) by means of a tool (9), disposed on the free end (8) of said spindle,
- a first tool store (10) being disposed in the region of the at least one processing station (5),
- in which tool store are accommodated a plurality of processing tools (9) and/or guide mandrels (11) for internal tools (13), and
- which tool store is wholly or partially displaceable to the processing spindle (7), in order to dispose processing tools (9) and/or clamping mandrels on the processing spindle (7), and
- an internal processing tool (13) being insertable through an opening (14) of the workpiece (2) into the interior (15) thereof, and
- being securable there by means of at least one clamping mandrel, which extends through an additional opening (16) of the workpiece (2),
**characterised in that**
- a second tool store (12) is provided,
- in/on which are contained internal processing tools (13), and
- at least one tool store (12) has a tool supporting disc (32), which is provided with radial slots or guide members (31), and on which the tools (9) are disposed on radially displaceable tool retaining arms (33), and at least one motively drivable tool conveying means (34) is provided, which displaces a tool (9), disposed on a tool retaining arm (33), from a radial internal parked position into a radially external transfer position.

2. Apparatus according to claim 1, **characterised in that** the additional tool store (12) is disposed centrally above the clamped-on workpiece (2).

3. Apparatus according to claim 1 or 2, **characterised in that** the processing station (5) includes a second spindle (18), and a third tool store (19) is disposed in the region of the second spindle (18).

4. Apparatus according to one of claims 1 - 3, **characterised in that** a rotary attachment (20), which is rotatable about a vertically extending axis (21), is disposed on the machine frame (3), and on which attachment is secured the clamping apparatus for the accommodation of the workpiece (2).

5. Apparatus according to one of claims 1-3, **characterised in that** the two processing spindles (7, 18) are in alignment with each other or can be brought into an aligned processing position.

6. Apparatus according to claim 5, **characterised in that** the free ends (8) of the processing spindles (7, 18) or of the guide mandrels (11) have coupling configurations which are suitable for the accommodation of an internal tool.

7. Apparatus according to one of the preceding claims, **characterised in that** the processing spindles (7, 18) of the two processing stations are simultaneously displaceable in the longitudinal direction of the spindles.

8. Apparatus according to one of the preceding claims, **characterised in that** the processing spindles (7, 18) of the two processing stations are disposed so as to be simultaneously adjustable or displaceable in at least one plane which extends at right angles to the longitudinal axis of the spindles.

9. Apparatus according to claim 4, **characterised in that** the rotary attachment (20) is disposed on the machine frame (3) so as to be displaceable at right angles to the longitudinal axis of the processing spindles (7, 18).

10. Apparatus according to claim 4, **characterised in that** the clamping apparatus (4) is secured on the rotary attachment (20) by means of a zero-point clamping system.

11. Apparatus according to claim 4, **characterised in that** an automatic pallet-changing system, which co-operates with the rotary attachment (20), is provided in the region of the machine frame (3).

12. Apparatus according to one of the preceding claims, **characterised in that** a plurality of rotary attachments (20) is disposed on the machine frame (3), which attachments are spatially associated with a plurality of processing stations (5).

13. Apparatus according to one of the preceding claims, **characterised in that** the first tool store (10) and/or the second tool store (12) and/or the third tool store (19) are/is displaceable over different processing stations (5) and/or clamped-on workpieces (2), and are/is usable in association with said workpieces.

14. Apparatus according to one of the preceding claims, **characterised in that** at least one loading station (25) is disposed on the machine frame (3).

15. Apparatus according to one of the preceding claims, **characterised in that** the loading station (25) has a rotary attachment (20), which is provided with a clamping apparatus and is displaceable from a loading position into a processing position.

16. Apparatus according to one of the preceding claims, **characterised in that** the tool stores (10, 12, 19) are displaceable from a working position above the workpiece(s) (2) and/or the processing station(s) into at least one change-over position.

17. Apparatus according to one of the preceding claims, **characterised in that** the tool stores (10, 12, 19) are retained above the machine frame (3) on at least one guiding arrangement.

18. Apparatus according to one of the preceding claims, **characterised in that** more than three disc-like or star-like tool stores (10, 12, 19) are associated with two spindle stations and one workpiece (2) clamped-on centrally therebetween.

19. Apparatus according to one of the preceding claims, **characterised in that** the tool (9), in the radially external transfer position, is disposed in a processing position, which is in alignment with at least one processing spindle (7), and said tool is received by a coupling means of a processing spindle.

20. Apparatus according to one of the preceding claims, **characterised in that** the tool supporting disc (32), provided with the radial guide members (31), is disposed so as to be motively rotatable.

21. Apparatus according to one of the preceding claims, **characterised in that** the tool retaining arms (33) are guided by sliding means (35) in/on the radial guide members (31) of the tool supporting disc (32).

22. Apparatus according to one of the preceding claims, **characterised in that** a non-rotatable counter-disc (37), provided with an annular guide means or an annular groove (36), is disposed parallel to the tool supporting disc (32), the guide means or annular groove of which counter-disc is provided with an opening (38) extending to the processing position, an entrainment means (40) of the tool retaining arms (33) being disposed in the annular groove (36) in the parked position of the tools (9).

23. Apparatus according to claim 22, **characterised in that**, during the rotation of the tool supporting disc (32), the entrainment means (40) of the tool retaining arms (33) rotate on the guide means or in the annular groove (36) of the counter-disc (37).

24. Apparatus according to one of the preceding claims, **characterised in that** the tool conveying means (34), disposed on the supporting disc (32), in a radially internal receiving position, engages around an entrainment means (40) of a tool retaining arm (33) by means of a gripping device (41), and displaces said retaining arm radially outwardly in the direction of the transfer position.

25. Apparatus according to one of the preceding claims, **characterised in that** a separate tool conveying means (34) is disposed on the tool supporting disc (32) for each tool retaining arm (33).

26. Apparatus according to one of the preceding claims, **characterised in that** the entrainment means (40) are in the form of cam rollers, which travel in the annular groove (36) during the rotation of the tool supporting disc (32).

27. Apparatus according to one of the preceding claims, **characterised in that** the opening (38) in the annular groove (36) of the counter-disc (37) is closable by a slider during the rotation of the tool supporting disc (32).

28. Apparatus according to one of the preceding claims, **characterised in that** pipes and/or nozzles, for supplying cooling, lubricating or cleaning media to the mechanical interface, are disposed on each tool retaining arm (33) between the coupling end of the processing spindles or guide mandrels respectively and the tool (9).

## Revendications

1. Dispositif (1) d'usinage de pièces (2), en particulier pour l'usinage intérieur de carters d'engrenages différentiels ou de carters de types autres, munis d'une pluralité de sièges de paliers dans la région intérieure ou dans la région ouverte, comprenant
- un bâti (3) de machine,
- un système d'ablocage (4) disposé sur ledit bâti (3) de machine, en vue de recevoir la pièce (2) à usiner,
- au moins un poste d'usinage (5) disposé sur le bâti (3) de machine et englobant
-- au moins une broche d'usinage (7) qui est placée sur un chariot (6), peut être présentée à la pièce à usiner (2) abloquée, et usine des zones intérieures ou extérieures de ladite pièce (2) au moyen d'un outil (9) situé à son extrémité libre (8), sachant
- que la région du poste d'usinage (5), prévu au minimum, comporte un premier magasin d'outillage (10)
-- dans lequel est logée une pluralité d'outils d'usinage (9) et/ou de mandrins (11) de guidage d'outils intérieurs (13), et
-- qui est mobile vis-à-vis de la broche d'usinage (7), totalement ou en partie, de manière à déposer des outils d'usinage (9) et/ou des mandrins d'ablocage sur ladite broche d'usinage (7) ; et sachant
- qu'un outil (13) d'usinage intérieur peut être inséré, à travers un orifice (14) de la pièce (2) à usiner, dans l'espace interne (15) de cette dernière
-- dans lequel il peut être verrouillé à demeure par l'intermédiaire d'au moins un mandrin d'ablocage traversant un autre orifice (16) de ladite pièce (2) à usiner,
**caractérisé par**
- la présence d'un deuxième magasin d'outillage (12)
-- dans/sur lequel des outils (13) d'usinage intérieur sont agencés ; et par le fait
- qu'au moins un magasin d'outillage (12) présente un disque (32) porte-outils doté de fentes radiales ou de guides radiaux (31), et sur lequel les outils (9) sont disposés sur des bras (33) porte-outils pouvant coulisser radialement, et sachant qu'il est prévu un élément (34) de convoyage d'outils qui peut être entraîné en mode motorisé et qui déplace un outil (9), disposé sur un bras (33) porte-outils, d'une position radialement intérieure de remisage à une position radialement extérieure de transfert.

2. Dispositif selon la revendication 1,
**caractérisé par le fait que**
le magasin d'outillage (12) supplémentaire occupe une position centrale au-dessus de la pièce à usiner (2) abloquée.

3. Dispositif selon la revendication 1 ou 2,
**caractérisé par le fait que**
le poste d'usinage (5) englobe une seconde broche (18), un troisième magasin d'outillage (19) se trouvant dans la région de ladite seconde broche (18).

4. Dispositif selon l'une des revendications 1-3,
**caractérisé par**
la présence, sur le bâti (3) de machine, d'un plateau circulaire (20) qui peut tourner autour d'un axe (21) s'étendant verticalement, et sur lequel est fixé le système d'ablocage conçu pour recevoir la pièce (2) à usiner.

5. Dispositif selon l'une des revendications 1-3,
**caractérisé par le fait que**
les deux broches d'usinage (7, 18) se trouvent dans l'alignement mutuel, ou peuvent être amenées à une position d'usinage à alignement mutuel.

6. Dispositif selon la revendication 5,
**caractérisé par le fait que**
les extrémités libres (8) des broches d'usinage (7, 18), ou bien des mandrins de guidage (11), présentent des profils d'accouplement appropriés pour recevoir un outil intérieur.

7. Dispositif selon l'une des revendications précédentes,
**caractérisé par le fait que**
les broches d'usinage (7, 18) des deux postes d'usinage peuvent être simultanément déplacées dans la direction longitudinale desdites broches.

8. Dispositif selon l'une des revendications précédentes,
**caractérisé par le fait que**
les broches d'usinage (7, 18) des deux postes d'usinage sont agencées, avec faculté de réglage ou de déplacement simultané, dans au moins un plan s'étendant perpendiculairement à l'axe longitudinal desdites broches.

9. Dispositif selon la revendication 4,
**caractérisé par le fait que**
le plateau circulaire (20) est placé, sur le bâti (3) de machine, avec faculté de déplacement perpendiculaire à l'axe longitudinal des broches d'usinage (7, 18).

10. Dispositif selon la revendication 4,
**caractérisé par le fait que**
le système d'ablocage (4) est fixé sur le plateau circulaire (20) au moyen d'un système de serrage à point zéro.

11. Dispositif selon la revendication 4,
**caractérisé par le fait**
**qu'**un système automatique de remplacement de palettes, coopérant avec le plateau circulaire (20), est prévu dans la région du bâti (3) de machine.

12. Dispositif selon l'une des revendications précédentes,
**caractérisé par le fait**
**qu'**une pluralité de plateaux circulaires (20), placés sur le bâti (3) de machine, est spatialement assignée à une pluralité de postes d'usinage (5).

13. Dispositif selon l'une des revendications précédentes,
**caractérisé par le fait que**
le premier magasin d'outillage (10), et/ou le deuxième magasin d'outillage (12), et/ou le troisième magasin d'outillage (19) est (sont) déplaçable(s) au-dessus de différent(e)s postes d'usinage (5) et/ou pièces à usiner (12) abloquées, et peu(ven)t être utilisé(s) en association avec ces derniers (ces dernières).

14. Dispositif selon l'une des revendications précédentes,
**caractérisé par le fait**
**qu'**au moins un poste de chargement (25) se trouve sur le bâti (3) de machine.

15. Dispositif selon l'une des revendications précédentes,
**caractérisé par le fait que**
le poste de chargement (25) présente un plateau circulaire (20) pourvu d'un système d'ablocage, et pouvant être déplacé d'une position de chargement à une position d'usinage.

16. Dispositif selon l'une des revendications précédentes,
**caractérisé par le fait que**
les magasins d'outillage (10, 12, 19) peuvent être déplacés depuis une position de travail jusqu'à au moins une position de transformation, au-dessus de la (des) pièce(s) (2) à usiner et/ou au-dessus du (des) poste(s) d'usinage.

17. Dispositif selon l'une des revendications précédentes,
**caractérisé par le fait que**
les magasins d'outillage (10, 12, 19) sont retenus, au-dessus du bâti (3) de machine, sur au moins un ensemble de guidage.

18. Dispositif selon l'une des revendications précédentes,
**caractérisé par le fait que**
plus de trois magasins d'outillage (10, 12, 19), en forme de disques ou de tourniquets, sont affectés à deux postes porte-broches et à une pièce à usiner (2) abloquée centralement entre ces derniers.

19. Dispositif selon l'une des revendications précédentes,
**caractérisé par le fait que,**
dans la position de transfert radialement extérieure, l'outil (9) occupe une position d'usinage alignée avec au moins une broche d'usinage (7), et est reçu par un élément d'accouplement d'une broche d'usinage.

20. Dispositif selon l'une des revendications précédentes,
**caractérisé par le fait que**
le disque (32) porte-outils, muni des guides radiaux (31), est agencé avec faculté de mise en rotation motorisée.

21. Dispositif selon l'une des revendications précédentes,
**caractérisé par le fait que**
les bras (33) porte-outils sont guidés, par des éléments de glissement (35), dans/sur les guides radiaux (31) du disque (32) porte-outils.

22. Dispositif selon l'une des revendications précédentes,
**caractérisé par**
la présence, parallèlement au disque (32) porte-outils, d'un disque complémentaire (37) non rotatif, doté d'un élément de guidage de type annulaire ou d'une rainure annulaire (36), et dont l'élément de guidage ou la rainure annulaire (36) est muni(e) d'un évidement (38) s'étendant vers la position d'usinage, sachant que, en position de remisage des outils (9), un élément d'entraînement (40) des bras (33) porte-outils est logé dans ladite rainure annulaire (36).

23. Dispositif selon la revendication 22,
**caractérisé par le fait que,**
lors d'une rotation du disque (32) porte-outils, les éléments d'entraînement (40) des bras (33) porte-outils tournent sur l'élément de guidage ou dans la rainure annulaire (36) du disque complémentaire (37).

24. Dispositif selon l'une des revendications précédentes,
**caractérisé par le fait que,**
dans une position de réception radialement intérieure, l'élément (34) de convoyage d'outils disposé sur le disque (32) porte-outils ceinture, par un organe de préhension (41), un élément d'entraînement (40) d'un bras (33) porte-outils et pousse ledit bras vers l'extérieur, dans le sens radial, dans la direction de la position de transfert.

25. Dispositif selon l'une des revendications précédentes,
**caractérisé par le fait**
**qu'**un élément (34) de convoyage d'outils, distinct pour chaque bras (33) porte-outils, se trouve sur le disque (32) porte-outils.

26. Dispositif selon l'une des revendications précédentes,
**caractérisé par le fait que**
les éléments d'entraînement (40) sont réalisés sous la forme de rouleaux à cames qui roulent dans la rainure annulaire (36) lors d'une rotation du disque (32) porte-outils.

27. Dispositif selon l'une des revendications précédentes,
**caractérisé par le fait que**
l'évidement (38) de la rainure annulaire (36) du disque complémentaire (37) peut être obturé par une pièce coulissante lors d'une rotation du disque (32) porte-outils.

28. Dispositif selon l'une des revendications précédentes,
**caractérisé par le fait que**
des conduites et/ou des buses se trouvent sur chaque bras (33) porte-outils, en vue de l'amenée de fluides de refroidissement, de lubrification ou de nettoyage vers l'interface mécanique entre l'outil (9) et l'extrémité respective d'accouplement des broches d'usinage, ou des mandrins de guidage.
